# EUROPÄISCHE PATENTANMELDUNG

(11) **EP 3 279 643 A1**
(43) Veröffentlichungstag der Anmeldung: **07.02.2018**
(21) Anmeldenummer: 17401050.4
(22) Anmeldetag: 18.05.2017
(51) Int. Cl.: G01N 21/65

(54) **SERS-SUBSTRAT UND VERFAHREN ZUM HERSTELLEN EINES SERS-SUBSTRATS**

(30) Priorität: 04.08.2016 DE 102016114440
(71) Anmelder: Karlsruher Institut für Technologie, 76131 Karlsruhe (DE)
(72) Erfinder: SIDDIQUE RAD-WANUL, Hasan, Pasadena, CA 91106 (US); HÖLSCHER, Hendrik, 76356 Weingarten (DE); MERTENS, Jan, 71711 Steinheim an der Murr (DE); VIGNOLINI, Silvia, Cambridge Great Britain, CB41DZ (GB)

(57) **Zusammenfassung**

Die vorliegende Erfindung stellt ein SERS-Substrat (10) für die oberflächenverstärkte Raman-Spektroskopie und ein Herstellverfahren dafür bereit. Erfindungsgemäß wird in einem Schritt a) das Basissubstrat (1) bereitgestellt und in einem Schritt b) eine Oberfläche des Basissubstrats (1) mit einer Mischung aus zwei Polymeren, die sich hinsichtlich ihrer Löslichkeit und/oder Polarität unterscheiden, beschichtet. Dabei bildet ein erstes Polymer der Polymer-Mischung eine Vielzahl an Polymer-Inseln (2) in einer kontinuierlichen, flächigen Phase eines zweiten Polymers (3) in Selbstorganisation. In einem weiteren Schritt c) wird die Oberfläche des beschichteten Basissubstrats (1) mit einem Lösungsmittel behandelt. Dabei werden die Polymer-Inseln (2) gelöst und eine Vielzahl Lochstrukturen (5) gebildet, deren Grund durch das Basissubstrat (1) gebildet wird. Zuletzt wird eine Metallschicht (4) auf die Oberfläche des beschichteten Basissubstrats (1) aufgebracht (Schritt d)), wobei die Metallschicht (4) eine Oberfläche des zweiten Polymers (3) und den Grund der Lochstrukturen (5) bedeckt, wodurch metallene Nanostrukturen auf der Oberfläche des Basissubstrats (1) erzeugt werden.

## Beschreibung

Die Erfindung betrifft ein SERS-Substrat für die oberflächenverstärkte Raman-Spektroskopie sowie ein Verfahren zum Herstellen eines solchen Substrats.

Aus dem Stand der Technik sind Substrate für die oberflächenverstärkte Raman-Spektroskopie (SERS) bekannt, wobei SERS eine spektroskopische Messmethode zum Detektieren kleinster Molekül-Spuren und Identifizieren derselben anhand ihrer Vibrationscharakteristika (sogenannter Fingerabdruck) ist (siehe Moskovits, Rev. Mod. Phys. 57, 783 (1985); Sharma et al., Materials Today 15, 16 (2012)). SERS wird zum Beispiel in der Biologie verwendet zur Charakterisierung von Substanzen. Um das molekulare Vibrationssignal zu erhöhen, können sogenannte SERS-Substrate verwendet werden, wobei das einfallende sowie das nach Raman gestreute Licht mit metallischen Nanostrukturen auf den SERS-Substraten wechselwirkt. Die Qualität des nanostrukturierten Materials oder metallenen Nanopartikeln definiert den Verstärkungsfaktor, der erreicht werden kann, um das Signal zu verbessern.

Bisher verfügbare SERS Substrate haben oft Stabilitätsprobleme (zum Beispiel oxidieren Silberoberflächen schnell), müssen aufgrund ihrer empfindlichen Oberflächen in Reinräumen oder im Kühlschrank aufbewahrt werden. Ferner sind die Substrate zumeist dazu vorgesehen das Raman Signal nur bei spezifischen und festen Wellenlängen zu verstärken, meistens beschränkt auf den roten oder infraroten Wellenlängenbereich. Werden Edelmetalle, wie Gold, verwendet, sind die Materialien teuer. Die meisten Substrate sind auch in der Herstellung teuer, da die verwendeten Herstellungsverfahren, wie Focused-Ion-Beam Lithographie oder Elektronenstrahllithographie, aufwändig und schwierig zu kontrollieren sind. Außerdem erzeugen sie nur einen beschränkten Arbeitsbereich, also einzelne "Hotspots" (Bereiche, in denen die Raman-Strahlung verstärkt werden kann). Auch benötigen die bisherigen selbst-organisierenden Substrate giftige und gefährliche Nass-Chemie für die Herstellung und sind limitiert in ihrer Skalierbarkeit für die Produktion.

Ausgehend von diesem Stand der Technik ist es Aufgabe der vorliegenden Erfindung, ein verbessertes Verfahren zum Herstellen eines SERS-Substrats bereitzustellen, das kostengünstig ist und reproduzierbare Substrate liefert.

Diese Aufgabe wird durch ein Verfahren zum Herstellen eines SERS-Substrats mit den Merkmalen des Anspruchs 1 gelöst.

Die weitere Aufgabe, ein SERS-Substrat bereitzustellen, das robust und skalierbar ist, wird durch das Substrat mit den Merkmalen des unabhängigen Anspruchs 8 gelöst.

Weiterbildungen und bevorzugte Ausführungsformen des Herstellungsverfahren und des Substrats sind in den Unteransprüchen ausgeführt.

Eine erste Ausführungsform bezieht sich auf ein Verfahren zum Herstellen eines SERS-Substrats für die oberflächenverstärkte Raman-Spektroskopie.

Erfindungsgemäß wird in einem Schritt a) das Basissubstrat bereitgestellt und in einem Schritt b) eine Oberfläche des Basissubstrats mit einer Mischung aus zwei oder mehreren Polymeren, die sich hinsichtlich ihrer Löslichkeit und/oder Polarität unterscheiden, beschichtet. Dabei bildet ein erstes Polymer der Polymer-Mischung eine Vielzahl an Polymer-Inseln in einer kontinuierlichen, flächigen Phase eines zweiten Polymers in Selbstorganisation. Es wird somit eine flächige Polymer-Schicht aus dem zweiten Polymer erzeugt, wobei die Polymer-Inseln, die durch das erste Polymer in Selbstorganisation gebildet werden, in der Polymer-Schicht des zweiten Polymers eingebettet sind.

In einem weiteren Schritt c) wird die Oberfläche des beschichteten Basissubstrats mit einem Lösungsmittel behandelt. Dabei werden die Polymer-Inseln gelöst und eine Vielzahl Lochstrukturen gebildet, deren Grund durch das Basissubstrat gebildet wird.

Zuletzt wird eine Metallschicht auf die Oberfläche des beschichteten Basissubstrats aufgebracht (Schritt d)), wobei die Metallschicht eine Oberfläche des zweiten Polymers und den Grund der Lochstrukturen bedeckt. Dadurch entstehen runde, metallische Nanoscheiben am Grunde der Lochstrukturen. Die Nanoscheiben haben einen Abstand *D*_{Lücke} (sogenanntes "Nanogap") zur Metallschicht auf der Oberfläche des Basissubstrats.

So kann ein SERS-Substrat produziert werden, das robust ist und mittels einer Lithographie-freien Technik ein genau definierter Abstand D hergestellt werden kann. Dies bringt weiterhin die Vorteile, dass - abgesehen vom Herauslösen der Lochstrukturen - nicht nasschemisch gearbeitet werden muss und die Substrate frei von Nanopartikeln sind.

Die Erfindung kann in einer Weiterbildung vorsehen, dass die Mischung aus zwei oder mehr Polymeren durch Spin-Coating auf die Oberfläche des Basissubstrats aufgebracht wird. Unter Spin-Coating kann ein bestimmter Aufschleudervorgang oder auch eine Rotationsbeschichtung verstanden werden. Um einen gleichmäßigen Auftrag der Polymermischung zu erreichen, können neben dem Spin-Coating auch andere Auftragungsmöglichkeiten genutzt werden, so z. B. Dip-Coating oder Blade-Coating.

Ferner kann die Mischung aus zwei oder mehr Polymeren in einer Dicke *D*_{Polymer} in einem Bereich von 20 nm, bevorzugt von 30 nm, besonders bevorzugt von 50 nm bis 300 nm, bevorzugt bis 200 nm, besonders bevorzugt bis 150 nm aufgebracht werden. Damit wird eine feste Polymerschicht ermöglicht, in der die Lochstrukturen gut ausgebildet werden können.

In einer Weiterbildung des Verfahrens kann vorgesehen sein, dass in der Polymer-Mischung das erste Polymer Polystyrol (PS) und das zweite Polymer Polymethylmethacrylat (PMMA) ist. Ganz allgemein können solche Strukturen aus nicht mischbaren Homopolymeren hergestellt werden, z.B. Poly(dimethyl siloxane) (PDMS), Poly(vinyl acetate) (PVA), Poly(n-butyl methacrylate) (PBMA) Polyisobutylene (PIB), Poly(p-phenylene oxide) (PPO), Polybutadiene) (siehe Walsh et al., Macromolecules 25, 5236 (1992)). Eine Mischung aus diesen Polymeren ermöglicht genau die gewünschte Zusammensetzung und kann Lochstrukturen erzeugen, die einen vorbestimmten Abstand zueinander bzw. bestimmte Lochgrößen aufweisen, wodurch das Substrat so erzeugt werden kann, dass die Raman-Verstärkung in dem gewünschten Wellenbereich erfolgt. Durch die Verwendung von kommerziell erhältlichen Materialien kann die Herstellung des Substrats in einfacher Weise kostengünstig erfolgen.

Die Erfindung kann weiterhin vorsehen, dass die Polymer-Mischung vor dem Auftragen in einem Verhältnis von drei Teilen PMMA zu einem Teil PS vorliegt, wobei durch das Verhältnis der Polymere in der Polymer-Mischung ein Abstand zwischen den Inseln und deren Größe vorbestimmbar eingestellt werden kann. Der Anteil an PMMA kann zwischen 50% und 80% betragen, wobei unter 50% keine Entmischung mehr stattfindet. Die Polymermischung kann in einer Mischlösung mit Methylethylketon (MEK) in einem bestimmten Verhältnis vorliegen. Je nach Mischverhältnis und verwendeten Polymeren kann dadurch erreicht werden, dass die fertige nanostrukturierte Oberfläche bestimmte Lochgrößen und -abstände aufweist. So kann eine Oberfläche mit Nanostrukturen erzeugt werden, die über eine Million Nanolöcher pro Quadratzentimeter aufweist.

In Schritt c) kann zum Lösen des ersten Polymers vorgesehen sein, dass die Polymer-Inseln durch Auftragen eines Lösungsmittels gelöst werden. Das erste Polymer kann effektiv entfernt werden und die Lochstrukturen übrig lassen. Im Falle von PMMA und PS eignet sich z.B. Cyclohexan oder ein anderes Hexan, um das PS aus der PMMA Matrix zu lösen und die beschriebenen Nanolöcher zu erhalten. Bei der Wahl des richtigen Lösungsmittels ist zu beachten, dass das Lösungsmittel das erste Polymer löst und das zweite Polymer nicht oder wesentlich langsamer als das erste Polymer, so dass im Prinzip nur das erste Polymer gelöst wird und das zweite Polymer bestehen bleibt.

Die Erfindung kann ferner zusätzlich in Schritt d) vorsehen, dass die Metallschicht aus Aluminium oder einem anderen Metall (Au, Ag, Cu, ...) besteht. Aluminium ist preisgünstig und eignet sich gut, um die metallenen Nanostrukturen in geeigneter Weise zu erzeugen.

Um den oben beschriebenen Abstand zwischen der metallenen Schicht und den Nanoscheiben zu erhalten, kann erfindungsgemäß vorgesehen sein, dass die Metallschicht mit einer Dicke *D*_{Metall} = *D*_{Polymer} - *D*_{Lücke} aufgedampft wird. Bei einer Dicke der Polymerschicht *D*_{Polymer} von 50 nm werden also bevorzugt 40 bis 45 nm Metall aufgedampft, um einen idealen Abstand *D*_{Lücke} von 5 bis 10 nm zwischen Nanoscheiben und Metallschicht zu erhalten. So kann der Abstand Nanoscheibe zu Metallschicht *D*_{Lücke} in einem Bereich von 5 nm bis 20 nm, bevorzugt in einem Bereich von 5 nm bis 10 nm liegen. Die Dicke der Metallschicht *D*_{Metall} hängt also von der Dicke der Polymerschicht *D*_{polymer} ab. Um weniger Metall zu benutzen, sollte die Polymerschichtdicke entsprechend gering bleiben. Die Erzeugung der genannten Nanoscheiben ermöglicht es ein Substrat zu erhalten, das eine starke SERS-Verstärkung ermöglicht. Erst durch diese Scheibe ist die Verstärkung der Raman-Streuung in der gewünschten Weise möglich.

Eine Ausführungsform der Erfindung betrifft ein SERS-Substrat für die oberflächenverstärkte Raman-Spektroskopie, wobei das Substrat ein erfindungsgemäßes Substrat ist.

Für das Substrat kann weiterhin vorgesehen sein, dass das Basissubstrat ein Glas ist. Dabei können verschiedene Gläser, wie Quarzgläser oder auch Acrylglas verwendet werden. Wichtig ist eine inerte Basisstruktur, die nicht mit den aufgebrachten Polymeren, Lösungsmitteln oder Metallen reagiert, sondern eine solide und ebene Unterlage bildet, z.B. Quarzglas, Acrylglas oder auch Siliziumoxid oder Siliziumnitrid (Siliziumwafer mit einer Siliziumoxid- oder Siliziumnitridschicht).

Das fertige SERS-Substrat, das in der erfindungsgemäßen Weise hergestellt wird, ist besonders robust und stabil bei Raumtemperatur. Sie müssen nicht im Reinraum aufbewahrt werden. Das Verfahren ist sehr gut reproduzierbar und skalierbar. Die Produktion kann leicht in bestehende industrielle Prozesse integriert werden. Die Substrate sind auch gut in Breitbandapplikationen einzusetzen und ihr Arbeitsbereich, d. h. der Bereich, in dem die Raman-Streuung verstärkt werden soll, kann nach Bedarf eingestellt werden. Der Arbeitsbereich ist generell sehr hoch, da die Fläche, die genutzt werden kann, sich nicht auf einzelne Punkte bezieht, sondern über die gesamte Substratfläche verteilt ist.

Die Erfindung betrifft auch die Verwendung eines erfindungsgemäßen Substrats für die oberflächenverstärkte Raman-Spektroskopie.

Neben einer Nutzung für die Raman-Spektroskopie können weitere Anwendungsbereiche wie die Detektion von Sprengstoffen, Drogen (Untersuchung von Speichelproben), Qualifizierung und Quantifizierung von Spuren gefährlicher Substanzen in Lebensmitteln und auch die Detektion von Umweltschadstoffen sein. Auch in der Elektrochemie, Biochemie und in biologischen Untersuchungsmethoden kann das Substrat für die Raman-Spektroskopie eingesetzt werden und für genaue Messergebnisse sorgen.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Die Figuren sind lediglich eine schematische Darstellung einer Ausführungsform der Erfindung.

Dabei zeigen:
- Fig. 1: eine perspektivische Ansicht eines ersten Herstellungsschritts des erfindungsgemäßen Substrats,
- Fig. 2: eine perspektivische Ansicht eines zweiten Herstellungsschritts,
- Fig. 3: eine perspektivische Ansicht eines weiteren Herstellungsschritts, und
- Fig. 4: eine Seitenansicht des fertigen erfindungsgemäßen Substrats mit den Größen *D*_{Polymer}, *D*_{Metall} Und *D*_{Lücke}.

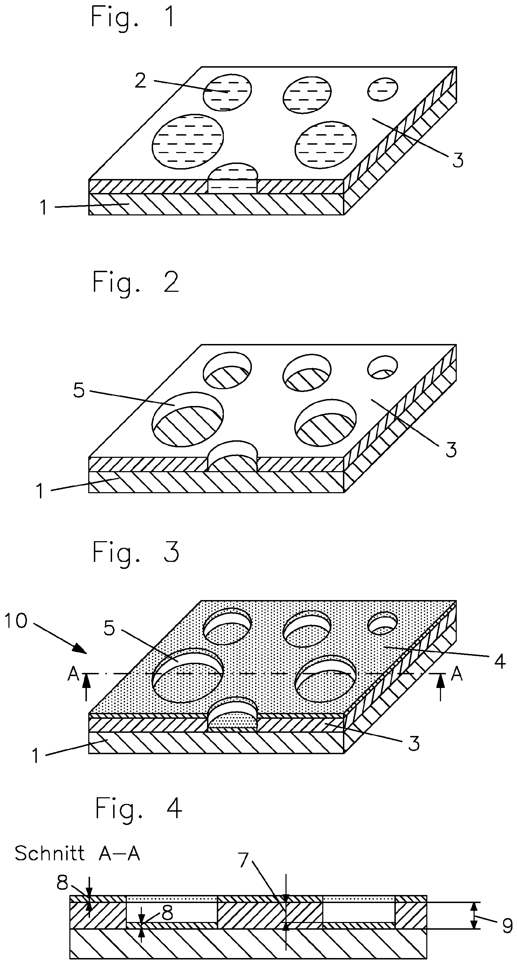

Die erfindungsgemäße Vorrichtung bezieht sich auf ein Substrat 10, das in folgender Weise hergestellt wird, wobei die **Fig. 1** bis **4** die wesentlichen Herstellungsschritte visualisieren.

Um ein Substrat 10 herzustellen, das für die oberflächenverstärkte Raman-Spektroskopie geeignet ist, wird zunächst ein Basissubstrat 1 aus einem Glas, wie bspw. Acrylglas bereitgestellt. Das Verfahren, um das Substrat 10 zu produzieren beinhaltet einen dreistufigen "bottom-up" Prozess, der als Mehrphasenpolymer-Lithographie bezeichnet werden kann ("polymer blend lithography"). Durch Kontrolle eines Spin-Coating-Aufbringens einer Polymer-Mischung in einer Zweiphasenmischung, kann eine selbstorganisierte nanostrukturierte Schicht erzeugt werden. Das Basissubstrat 1 wird zunächst mit Aceton, Isopropanol, destilliertem Wasser gereinigt und mit Stickstoff getrocknet. Dazu wird in einem ersten Schritt eine Oberfläche des Basissubstrats 1 mit einer Mischung aus zwei Polymeren, die sich hinsichtlich ihrer Löslichkeit bzw. Polarität unterscheiden, beschichtet, wie **Fig. 1** zeigt. Dabei ist ein erstes Polymer, insbesondere Polystyrol (PS), in einem zweiten Polymer, insbesondere Polymethylmethacrylat (PMMA), in einer Mischlösung in Methylethylketon (MEK) gelöst. Die Polymer-Mischung wird mittels Spincoating auf die Oberfläche des Basissubstrats 1 aufgebracht und zwar in einer Dicke in einem Bereich von 50 nm bis 200 nm, bevorzugt von 70 nm. Beispielhafte Parameter für das Spincoating ist eine Geschwindigkeit von 3500 rpm und eine Beschleunigung von 2000 rpm/s für 30 Sekunden. Die relative Feuchtigkeit liegt bei ca. 40 bis 50 % während des Spincoating.

Die Polymer-Mischung überzieht das Basissubstrat 1 mit einer gleichmäßigen Schicht, wobei das erste Polymer der Polymer-Mischung eine Vielzahl an Polymer-Inseln 2 in einer kontinuierlichen, flächigen Phase des zweiten Polymers 3 in Selbstorganisation bildet.

In einem nächsten Schritt (siehe **Fig. 2**) wird die so beschichtete Oberfläche des Basissubstrats 1 mit einem Lösungsmittel behandelt (in der Regel zweimal mit Lösungsmittel gewaschen und dann mit Stickstoff getrocknet). Dabei werden die Polymer-Inseln 2 aus dem ersten Polymer Polystyrol gelöst und in der festen Schicht des zweiten Polymers 3 eine Vielzahl Lochstrukturen 5 gebildet. Deren Grund ist durch die Oberfläche des Basissubstrats 1 gegeben.

Die Lochstrukturen und die zweite Polymer-Schicht 3 werden dann mit einem Metall überzogen: Dazu wird in dem dritten Schritt dann eine Metallschicht 4 auf die Oberfläche des beschichteten Basissubstrats 1 aufgebracht, wobei die Metallschicht 4 die Oberfläche des zweiten Polymers 3 und den Grund sowie die Seitenwände der Lochstrukturen 5 bedeckt. Bevorzugt wird Aluminium aufgedampft, es kann aber auch jedes andere dafür geeignete Metall aufgedampft werden (Gold, Silber, Kupfer, etc.). Die Dicke der Metallschicht 4 liegt in einem Bereich von 30 nm bis 70 nm, bevorzugt von 40 oder 50 nm. Die Dicke der Metallschicht 4 wird mit Hilfe einer Quartzkristall-Mikrowaage überwacht. Hierdurch werden metallene Nanostrukturen auf der Oberfläche des Basissubstrats 1 erzeugt.

Wie Fig. 4 in einem Schnitt A-A (siehe Fig. 3) zeigt, bedeckt die Metallschicht 4 als oberer Metallschicht die Oberfläche des zweiten Polymers 3 und den Grund der Lochstrukturen 5. Dadurch entstehen runde, metallische Nanoscheiben 6 in den Lochstrukturen bzw. deren Gründe, die einen Abstand *D*_{Lücke} 7 (sogenanntes "Nanogap") zur oberen Metallschicht 4 aufweisen. Um diesen Abstand *D*_{Lücke} 7 zwischen der oberen Metallschicht 4 und den Nanoscheiben 6 zu erhalten, kann erfindungsgemäß vorgesehen sein, dass die Metallschicht 4 mit einer vobestimmten Dicke *D*_{Metall} 8 aufgedampft wird, wobei diese Dicke 8 eine Dicke *D*_{Polymer} 9 der Polymerschicht aus dem zweiten Polymer 3 minus der zu erzeugenden Dicke *D*_{Lücke} 7 ist. Die Dicke *D*_{Metall} 8 der Metallschicht 4 hängt also von der Dicke *D*_{Polymer} 9 der Polymerschicht 3 ab und ist somit kleiner als die Dicke *D*_{Polymer} 9 der Polymerschicht: Bei einer Dicke der Polymerschicht *D*_{Polymer} 9 von in etwa 50 nm werden also bevorzugt 40 bis 45 nm Metall 4 aufgedampft, um einen vorbestimmten Abstand *D*_{Lücke} von 5 bis 10 nm zwischen Nanoscheiben und Metallschicht zu erhalten. So kann der Abstand Nanoscheibe 6 zu Metallschicht 4 *D*_{Lücke} 7 in einem Bereich von 5 nm bis 20 nm, bevorzugt in einem Bereich von 5 nm bis 10 nm liegen. Um weniger Metall benutzen zu müssen, sollte die Polymerschichtdicke *D*_{Polymer} 9 entsprechend gering bleiben.

Die Nanostrukturen formen Paare aus Nanolöchern, Nanoscheiben und kontinuierlicher Metalloberfläche, deren Charakteristika das optische Aussehen der erhaltenen Oberfläche bestimmt. Die Oberfläche erhält eine gleichmäßige Färbung, die Größe der Lochstrukturen 5 folgt einer Gauß'schen Verteilung. Der mittlere Abstand zwischen den Lochstrukturen 5 sowie die Größe der Lochstrukturen kann angepasst werden, wodurch sich die Färbung des erhaltenen Substrats 10 verändert. So liegt ein mittlerer Abstand zwischen den Nanoloch-Paaren bei in etwa 130 nm bis 200 nm, wobei die Anpassung dadurch erfolgen kann, dass das Massenverhältnis zwischen den beiden Polymeren, deren molekularer Kettenlänge und den zum Aufbringen verwendeten Spin-Coating-Parametern durch Lösungskonzentration und Umgebungsfeuchte eingestellt werden kann.

So können für blaue, grüne bzw. rote Meta-Oberflächen eine Lochgrößen-Verteilung mit Maxima bei 76 nm, 102 nm und 200 nm erreicht werden. Da die Lochstrukturen dicht gepackt sind, ist das zurück gestrahlte Licht sehr intensiv. Je weiter auseinander die Lochstrukturen 5 liegen bzw. je größer ihr Durchmesser ist, desto mehr wird die Farbe ins Rote verschoben.

### BEZUGSZEICHENLISTE

- 1: Basissubstrat
- 2: Polymer-Inseln
- 3: Zweites Polymer
- 4: Obere Metallschicht
- 5: Lochstrukturen
- 6: Nanoscheiben
- 7: Abstand zwischen oberer Metallschicht und Nanoscheiben
- 8: Dicke der Metallschicht
- 9: Dicke der Polymerschicht
- 10: SERS-Substrat

## Patentansprüche

1. Verfahren zum Herstellen eines SERS-Substrats (10) für die oberflächenverstärkte Raman-Spektroskopie,
**umfassend die Schritte**
a) Bereitstellen eines Basissubstrats (1);
b) Beschichten einer Oberfläche des Basissubstrats (1) mit einer Mischung aus zumindest zwei Polymeren, die sich hinsichtlich ihrer Löslichkeit und/oder Polarität unterscheiden, wobei ein erstes Polymer der Polymer-Mischung eine Vielzahl an Polymer-Inseln (2) in einer kontinuierlichen, flächigen Phase eines zweiten Polymers (3) in Selbstorganisation bildet;
c) Behandeln der Oberfläche des beschichteten Basissubstrats (1) mit einem Lösungsmittel, dabei Lösen der Polymer-Inseln (2) und Bilden einer Vielzahl Lochstrukturen (5), deren Grund durch das Basissubstrat (1) gebildet wird, und
d) Aufbringen einer Metallschicht (4) auf die Oberfläche des beschichteten Basissubstrats (1), wobei die Metallschicht (4) eine Oberfläche des zweiten Polymers (3) und den Grund der Lochstrukturen (5) bedeckt, dadurch Erzeugen metallener Nanostrukturen auf der Oberfläche des Basissubstrats (1).

2. Verfahren nach Anspruch 1,
**wobei in Schritt b)**
die Mischung aus zumindest zwei Polymeren
- durch Spin-Coating, Blade-Coating oder Dip-Coating auf die Oberfläche des Basissubstrats (1) aufgebracht wird, und/oder
- in einer Dicke in einem Bereich von 20 nm bis 150 nm, bevorzugt von 50 nm aufgebracht wird.

3. Verfahren nach Anspruch 1 oder 2,
**wobei**
die Metallschicht (4) am Grunde der Lochstrukturen (5) metallene Nanoscheiben (6) bildet.

4. Verfahren nach einem der Ansprüche 1 bis 3,
**wobei**
in der Polymer-Mischung das erste Polymer Polystyrol (PS) und das zweite Polymer Polymethylmethacrylat (PMMA) ist. Andere nicht mischbare Homopolymere sind möglich, z.B. z.B. Poly(dimethyl siloxane) (PDMS), Poly(vinyl acetate) (PVA), Poly(n-butyl methacrylate) (PBMA) Polyisobutylene (PIB), Poly(p-phenylene oxide) (PPO), Polybutadiene)

5. Verfahren nach Anspruch 4,
**wobei**
die Polymer-Mischung vor dem Auftragen in einem Verhältnis von drei Teilen PMMA zu einem Teil PS vorliegt und/oder in einer Mischlösung in Methylethylketon (MEK) vorliegt, wobei durch das Verhältnis der Polymere in der Polymer-Mischung ein Abstand zwischen den Inseln (2) vorbestimmbar eingestellt wird.

6. Verfahren nach einem der Ansprüche 1 bis 5,
**wobei in Schritt c)**
die Polymer-Inseln (2) durch Auftragen von einem Hexan als Lösungsmittel oder einem anderen Lösungsmittel gelöst werden.

7. Verfahren nach einem der Ansprüche 1 bis 6,
**wobei in Schritt d)**
die Metallschicht (4)
- aus Aluminium, Gold, Silber, Kupfer oder einem anderen Metall besteht und/oder
- in einer Dicke in einem Bereich von 30 nm bis 70 nm, bevorzugt von 50 nm aufgedampft wird.

8. SERS-Substrat (10) für die oberflächenverstärkte Raman-Spektroskopie
**dadurch gekennzeichnet, dass**
das Substrat ein Substrat (10), hergestellt nach einem der Ansprüche 1 bis 7, ist.

9. Substrat (10) nach Anspruch 8,
**dadurch gekennzeichnet, dass**
ein Abstand *D*_{Lücke} (7) einer Nanoscheibe (6) zu der Metallschicht (4) in einem Bereich von 5 nm bis 20 nm, bevorzugt in einem Bereich von 5 nm bis 10 nm liegt.

10. Substrat (10) nach Anspruch 8 oder 9,
**wobei**
das Basissubstrat (1) ein Glas ist.
